(19)

Europäisches
Patentamt
European
Patent Office
Office européen
des brevets

(11) **EP 1 973 071 A2**

(12) **EUROPEAN PATENT APPLICATION**

(43) Date of publication:
**24.09.2008 Bulletin 2008/39**

(51) Int Cl.:
***G06Q 20/00*** *(2006.01)*

(21) Application number: **08102654.4**

(22) Date of filing: **17.03.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(30) Priority: **22.03.2007 IT PD20070105** | (71) Applicant: **Dataimech S.r.o**<br>**Praha (CZ)**<br><br>(72) Inventor: **Beretta, Andrea**<br>**PRAHA (RO)**<br><br>(74) Representative: **Vinci, Marcello**<br>**Ufficio Veneto Brevetti**<br>**Via Sorio 116**<br>**35141 Padova (IT)** |

(54) **Multiple device and safe, effective and fair procedure for delivering and paying goods**

(57)    The invention concerns a new multiple device for delivering and paying goods and products in general, with terminals or electronic devices for transmitting/receiving data of various type, connected to one another, temporarily or permanently, through a public or private telematic network, of which at least one terminal is managed by the purchaser (A), at least one terminal is managed by the seller (V) and at least one terminal is managed by the tutor (T), that is, a party, person or company that has the task of verifying one or more steps of the sale and purchase of the goods, and wherein said checks are performed by exchanging data and/or codes and/or information of various type with one or more of said terminals.

Fig. 1

**Description**

The present patent concerns the field of devices for managing and controlling the remote purchase and sale of goods and in particular it concerns a new multiple device and the corresponding safe, effective and fair procedure for delivering and paying goods.

Today, the purchaser must trust that the goods he/she/it has bought and paid will be correctly delivered to him/her and the seller must trust that he/she/it will be correctly paid after delivering the goods.

In direct sale and purchase processes both the purchaser and the seller are sure of the result of the purchase and of the sale.

In remote sale and purchase processes between purchasers and sellers who know each other directly one party trusts the other owing to the fact that is has been acquainted with it for some time.

In remote sale and purchase processes between purchasers and sellers who don't know each other, especially online sales, there is a certain distrust of the parties vis-à-vis each other: the purchaser is afraid of not receiving the ordered and paid goods and the seller is afraid of not being paid for the delivered goods.

In fact, each party would prefer to fulfil its obligation, be it the payment or delivery of the goods, only once the other party has duly fulfilled its obligation.

To remedy all the above-mentioned drawbacks a new multiple device and the corresponding safe, effective and fair procedure for the delivery and payment of goods have been designed and implemented.

The new multiple device comprises at least four terminals that are interconnected via a telematic network and through which four parties or companies or different people operate, and precisely the purchaser, the seller, a tutor and the forwarder. The role of tutor can be assumed by a bank or by a specific company.

Each terminal may consist of a personal computer or a specific electronic apparatus. Said terminals can be interconnected via a public or private telematic network and each of them can be connected to said telematic network permanently or only when it needs to send and/or receive communications.

A suitable communication program or protocol ensures communication and confirmation of the various steps of the transaction involving the money and the goods.

In particular, the message or packet of information exchanged among said four people or companies includes the following items:

- date and time of the order;
- code of the bank selected for the payment of the goods;
- currency selected for the payment of the goods;
- a univocal identification code for the goods;
- answer of the bank concerning acceptance or rejection of the operation;

- seller's identification code;
- destination or destinations of the purchased goods.

Furthermore, the optional exchange of one or more of the following pieces of information is also included:

- a possible progressive order number entered by the purchaser;
- description of the purchased goods;
- indication of the language used for filling out the order;
- language of the amounts;
- identification code of the bank at which the operation should be carried out;
- electronic signature of the purchaser, if any;
- any note or complaint.

The sale and purchase of goods or services with the new multiple device follows a precise articulated procedure divided into several steps and ensures the smooth conclusion of the sale process.

The enclosed drawings show, as an indicative and non-limiting example, a schematic representation of the new safe, effective and fair procedure for the purchase, delivery and payment of goods of any type.

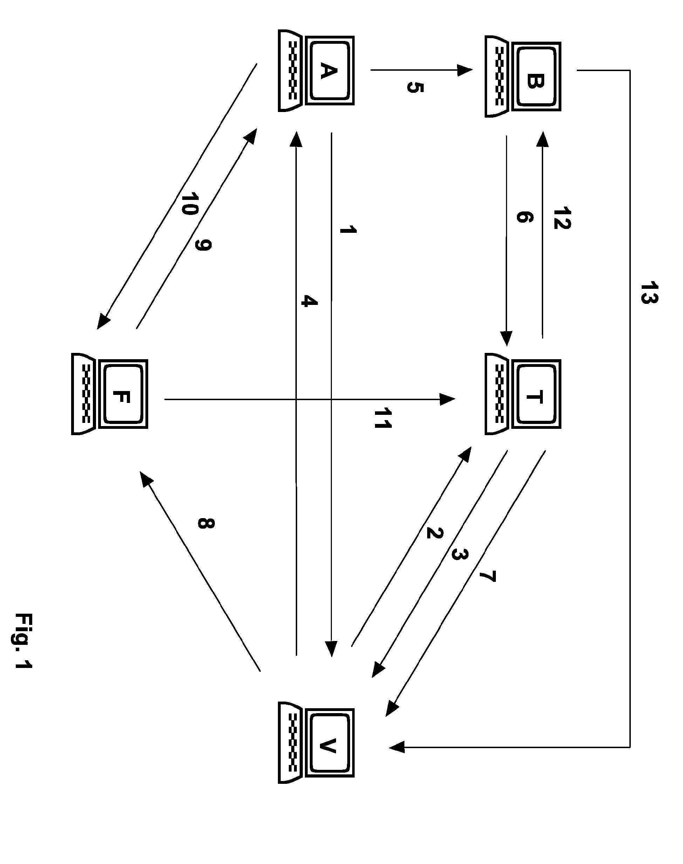

Figure 1 shows the sale and purchase procedure involving, in addition to the purchaser (A) and the seller (V), also at least one tutor (T), at least one forwarder (F) and at least one bank (B) or other financial institution or agency.

Each step of the procedure is represented with an arrow, starting from the party that performs the operation and pointing to the party to which the operation is addressed.

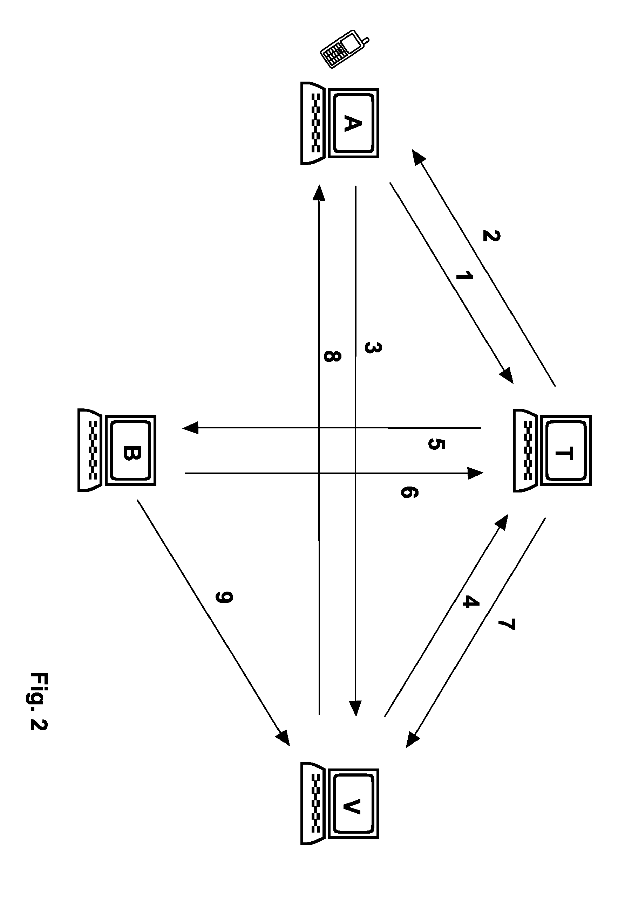

Figure 2, instead, shows a schematic representation of the sale and purchase of goods purchased directly at the cash desk, for example with POS card, credit card, prepaid card, or of the online sale and purchase of goods. In the latter case, the sale and purchase involves, in addition to the purchaser (A) and the seller (V), only the tutor (T) and the bank (B), while the intervention of the forwarder is excluded.

The various operations or steps of the sale and purchase process are substantially the following:

1) the purchaser (A) sends the purchase order to the seller (V), including the data that it is expected to supply as indicated above;

2) the seller (V) asks the tutor (T) to assign the order a univocal code for a predefined amount;

3) the tutor (T) assigns the code to the transaction and transmits it to the seller (V);

4) the seller (V) sends the order confirmation to the purchaser (A), indicating the availability of the goods ordered and the code assigned to the transaction;

5) the purchaser (A) transfers the amount corresponding to the transaction to the fair current account opened with the bank (B), sending also said code or packet of information that has already been exchanged between purchaser and seller and that contains all the details of the transaction;

6) the bank (B) communicates to the tutor (T) that it has received the amount fixed for the sale from the purchaser;

7) the tutor (T) confirms to the seller (V) that it has received the money, sending also the message or packet of information that has already been exchanged between tutor and seller, together with the authorization for shipping the goods;

8) the seller (V) delivers the ordered goods to the forwarder (F), with the code or packet of information concerning the transaction;

9) the forwarder (F) delivers the ordered goods to the purchaser (A);

10) the forwarder (F) files a document attesting that the delivery has been carried out, for example a note signed by the purchaser (A);

11) the forwarder (F) informs the tutor (T) about the result of the delivery corresponding to the code indicated in the message or packet of information;

12) the tutor (T) authorizes the bank (B) to pay the seller the amount transferred by the purchaser for the goods;

13) the bank (B) transfers the amount paid by the purchaser for the goods to the seller (V).

Said new multiple device and corresponding safe, effective and fair procedure for delivering and paying goods ordered online between people or companies that do not know each other allow the transaction to be carried out without problems, guaranteeing to the purchaser that the goods will be delivered and to the seller that the goods will be paid.

In fact, the tutor (T) guarantees that the purchaser (A) has paid the due amount to the bank (B), which keeps the money until the tutor (T) confirms that the goods have been shipped and delivered, following the corresponding communication received from the forwarder (F).

The sale and purchase of goods made directly at the cash desk or online, instead, substantially includes the following steps:

1) the purchaser (A) informs the tutor (T) of its intention to make a purchase, directly at the cash desk or online, using the fair code with pre-authorized automatic debit;

2) the tutor (T) returns the code of the transaction to the purchaser (A), together with any other information required;

3) the purchaser (A) communicates the code of the transaction to the seller (V);

4) the seller (V) asks the tutor (T) to verify that the payment has been made by the purchaser;

6) the bank (B) answers to the tutor (T) confirming whether the payment has been made or not;

7) the tutor (A) communicates the answer of the bank to the seller (V);

8) the seller (V) delivers the goods directly or sends them to the purchaser (A);

9) the bank (B) transfers the amount paid by the purchaser (A) for the goods to the seller (V).

Assignment of the code and verification of the same takes place through generation algorithms.

In particular, given:

A = alphabet used for the source DATA;
$a \in A$ = letters of the alphabet A;

$$C^A = \bigcup_{i=1}^{m} a_i \in A,$$ where m is variable;

A* = space of the words and therefore $C^A \in A^*$;
B = alphabet used for the target CODE;
$b \in B$ = letters of the alphabet B;

$$C^B = \bigcup_{i=1}^{m} b_i \in A,$$ where m is variable;

B* = space of words and therefore $C^B \in B^*$;
n = number of data contained in the CODE;
= DATAi, $i^{th}$ DATA of the CODE;
$K_i$ = length of the word $C^A_i$;
$f(A^*) \to B^*$ = invertible function, so that $f^{-1}$ is univocal, which compresses and encrypts the DATA and expresses them in B*.

According to the algorithm, given:

$C^A_1 = $ DATA, and $K_1$ = length ($C^A_1$);
$C^A_2 = $ DATA, and $K_2$ = length ($C^A_2$);
...;
$C^A_n = $ DATA$_n$ and $K_n$ = length ($C^A_n$);
the following is defined:

$$CODE^A = \bigcup_{i=1}^{n} C^A_i$$

length $(CODE^A) = \sum_{i=1}^{n} K_i$

$f(COD^A) \to CODE^B$

and where the $CODE^B$ can be used for the purpose of the fair and safe payment.

According to the verification algorithm, given:

$f^{-1}(CODE^B) . CODE^A$
$g(C^A, x, y) \in A^*$ is a function that gives as result the digits of $C^A$ starting from position x and for a length y and wherein:

$$DATA_i = C^A_i = g(CODE^A, \sum_{j=1}^{i-1} K_j, K_i) \in A$$

with i = {1,..., n}

In this way the data DATA$_1$, DATA$_2$, ..., DATA$_n$ can be verified for the application of the safe and fair payment procedure.

Therefore, with reference to the above description and the attached drawings, the following claims are expressed.

**Claims**

1. Multiple device for delivering and paying goods and products in general, **characterized in that** it comprises at least three terminals or electronic devices for transmitting/receiving data of various type, connected to one another, temporarily or permanently, through a public or private telematic network, of which at least one terminal is managed by the purchaser (A), at least one terminal is managed by the seller (V) and at least one terminal is managed by the tutor (T), that is, a party, person or company that has the task of verifying one or more steps of the sale and purchase transaction, and wherein said checks are performed by exchanging data and/or codes and/or information of various type with one or more of said terminals.

2. Device according to claim 1, **characterized in that** it comprises at least one further terminal or electronic device for transmitting/receiving data of various type, connected to one or more of said terminals and managed by a bank (B) or financial institution suited to receive and/or keep and/or transfer the payments received from the purchaser (A) for the purchase of the goods from said seller (V), and wherein each one of said actions takes place following a communication sent by said tutor (T).

3. Device according to claim 1, **characterized in that** it comprises at least one further terminal or electronic device for transmitting/receiving data of various type, connected to one or more of said terminals and managed by at least one forwarder (F) or party entrusted with the transport of the purchased goods from said seller (V) to said purchaser (A).

4. Multiple device for the delivery and payment of goods according to claims 1, 2, 3, **characterized in that** said terminals transmit/receive one or more of the following data:

   - date and time of the order;
   - code of the bank (B) selected for the payment of the goods;
   - currency/currencies selected for the payment of the goods;
   - at least one univocal identification code for the goods;
   - answer/s of the bank (B) concerning acceptance or rejection of the operation;
   - at least one identification code of the seller (V);
   - destination/s of the purchased goods;

5. Multiple device for the delivery and payment of goods according to claims 1, 2, 3, **characterized in that** said terminals transmit/receive also one or more of the following data:

   - progressive order number/s entered by the purchaser (A);
   - description of the purchased goods;
   - indication of the language/s used for filling out the order and/or of the corresponding amounts;
   - identification code/s of the bank with which the operation should be carried out;
   - electronic signature/s of the purchaser (A).

6. Process for the delivery and payment of goods, **characterized in that** it uses said terminals of the purchaser (A) and/or the seller (V) and/or the tutor (T) and/or the bank (B) and/or the forwarder (F) according to claims 1, 2, 3, 4, 5, and wherein:

   - the purchaser (A) sends the purchase order to the seller (V) including one or more of said data;
   - the seller (V) asks the tutor (T) a univocal code to be assigned to the order for a predefined amount;
   - the tutor (T) assigns the code to the transaction and transmits it to the seller (V);
   - the purchaser (A) transfers to the fair current account opened with the bank (B) the amount corresponding to the transaction, indicating also the code or packet of information that has already been exchanged between purchaser and seller and that contains all the details of the transaction;
   - the bank (B) communicates to the tutor (T) that it has received the amount fixed for the sale from the purchaser;
   - the tutor (T) confirms to the seller (V) that it has received the money, sending also the message or packet of information that has already been exchanged between tutor and seller, together with the authorization for shipping the goods;
   - the seller (V) delivers the ordered goods to the forwarder (F), with the code or packet of information concerning the transaction;
   - the forwarder (F) delivers the ordered goods to the purchaser (A);
   - the forwarder (F) files a document attesting the result of the delivery of the goods to the purchaser (A);
   - the transporter (F) informs the tutor (T) about the result of the delivery corresponding to the code indicated in the message or packet of information;

- the tutor (T) authorizes the bank (B) to transfer to the seller the amount paid by the purchaser for the goods;

- the bank (B) transfers to the seller (V) the amount paid by the purchaser for the goods.

7. Process for the delivery and payment of goods, **characterized in that** it uses said terminals of the purchaser (A) and/or the seller (V) and/or the tutor (T) and/or the bank (B) and/or the forwarder (F) according to claims 1, 2, 4, 5, and wherein:

- the purchaser (A) informs the tutor (T) of its intention to make a purchase, directly at the cash desk or online, using the fair code with pre-authorized automatic debit;

- the tutor (T) returns the code of the transaction to the purchaser (A), together with any other information required;

- the purchaser (A) communicates the code of the transaction to the seller (V);

- the seller (V) asks the tutor (T) to verify that the payment has been made by the purchaser;

- the tutor (T) asks the bank (B) to debit the due amount to the purchaser (A) and to inform it about the result of the transaction;

- the bank (B) answers to the tutor (T) confirming whether the payment has been made or not;

- the tutor (T) communicates the answer of the bank to the seller (V);

- the seller (V) delivers the goods directly or sends them to the purchaser (A);

- the bank (B) transfers to the seller (V) the amount paid by the purchaser (A) for the goods.

**Fig. 1**

Fig. 2